## Europäisches Patentamt
## European Patent Office
## Office européen des brevets

(19)

(11) Numéro de publication: **0 115 728 B1**

(12) # FASCICULE DE BREVET EUROPEEN

(45) Date de publication du fascicule du brevet:
**11.03.87**

(51) Int. Cl.⁴: **B 25 J 17/02**, B 23 K 9/28

(21) Numéro de dépôt: **83402513.2**

(22) Date de dépôt: **22.12.83**

(54) **Porte-organe adaptatif pour robot.**

(30) Priorité: **30.12.82 FR 8222101**

(43) Date de publication de la demande:
**15.08.84 Bulletin 84/33**

(45) Mention de la délivrance du brevet:
**11.03.87 Bulletin 87/11**

(84) Etats contractants désignés:
**DE GB IT SE**

(56) Documents cités:
**US - A - 4 229 641**

**PATENTS ABSTRACTS OF JAPAN, vol. 4, no. 143
(M-35)(625), 8 octobre 1980, page 123 M 35
PATENTS ABSTRACTS OF JAPAN, vol. 6, no. 97
(M-134)(975), 5 juin 1982
PATENTS ABSTRACTS OF JAPAN, vol. 6, no. 69
(M-125)(947), 30 avril 1982**

(73) Titulaire: **COMMISSARIAT A L'ENERGIE ATOMIQUE
Etablissement de Caractère Scientifique Technique et
Industriel, 31/33, rue de la Fédération, F-75015 Paris
(FR)**

(72) Inventeur: **Detriche, Jean-Marie, 38, rue de Tourville,
F-78100 Saint Germain en Laye (FR)**
Inventeur: **Fraize, Gérard, 82, rue de Fresnes,
F-94240 l'Hay les Roses (FR)**
Inventeur: **Rouget, Jean-Paul, 2, rue de Picardie -
AP. 305, F-25000 Besancon (FR)**

(74) Mandataire: **Mongrédien, André et al, c/o
BREVATOME 25, rue de Ponthieu, F-75008 Paris (FR)**

**Description**

La présente invention est relative aux porte-organe utilisables en télémanipulation ou robotique, que ces organes soient indifféremment des organes accomplissant à un certain instant et en un certain point une certaine opération, tels des outils de travail comme des torches de soudage, ou des organes de détection ou de mesure, et est plus précisément relative à ce type de porte-organe dans lesquels les deux opérations, d'une part de mise en position de l'organe par rapport à son point de travail selon un système de coordonnées de référence à trois degrés de liberté, et d'autre part, d'orientation de l'organe par rapport à ce point de travail, sont commandées par deux dispositifs distincts permettant de découpler ces deux opérations.

Selon une réalisation antérieurement connue d'un porte-organe de ce genre, un premier porte-organe initial est susceptible de se mouvoir dans l'espace selon trois degrés de liberté pour commander la mise en position désirée de l'organe par rapport à son point de travail, et ce dispositif porte-organe initial supporte lui-même un second porte-organe terminal comprenant, d'une part, un premier support portant un premier arbre dont l'axe géométrique est incliné par rapport à l'un des axes d'un système de référence dont l'origine est le point de travail et sécant avec cet axe en ce point de travail, des premiers moyens rotatifs étant prévus pour pouvoir faire tourner ce premier arbre autour dudit axe du système de référence et, d'autre part, un second support porté par le premier arbre portant un second arbre dont l'axe géométrique est confondu avec l'axe géométrique de l'organe et incliné par rapport à l'axe géométrique dudit premier arbre en étant sécant avec cet axe également audit point de travail, des seconds moyens rotatifs étant prévus pour pouvoir faire tourner ce second arbre autour de l'axe du premier, l'action combinée desdits premier et second moyens de rotation permettant d'obtenir l'orientation angulaire désirée de l'axe d'organe terminal par rapport au point de travail.

Il serait par ailleurs intéressant d'associer des porte-organe de ce genre à des moyens de détection de la position relative de l'organe par rapport au point de travail, et à des moyens de commande automatique de séquences d'opérations de l'organe selon des logiciels correspondant à des programmes opérationnels et contrôlés par les informations fournies par les moyens de détection de position.

La présente invention a pour but de perfectionner ce genre de porte-organe pour que le second porte-organe terminal permette de commander non seulement l'orientation angulaire de l'organe terminal par rapport au point de travail, mais également en outre une adaptation fine et précise de la position de l'organe terminal par rapport à son point de travail sans qu'il soit nécessaire d'avoir à actionner alors le porte-organe initial.

Comme les masses mises en mouvement du porte-organe initial sont plus importantes que pour le porte-organe terminal, plus léger par construction même, on comprend que l'objectif de l'invention vise à doter les porte-organe du genre précité de performances améliorées en ce sens que l'adaptation en temps réel de la position et de l'orientation de l'organe par rapport à son point de travail, en fonction de l'opération à effectuer et des conditions réelles dans lesquelles cette opération est effectuée, est obtenue avec un temps de réponse minimal et une précision maximale.

Le document JP-A 55 097 881 voir aussi PATENTS ABSTRACTS OF JAPAN vol 4, no 143 (M-35) (625) page 123 (M 35) concerne un dispositif de soudage automatique qui permet le soudage horizontal de toutes les faces intérieures et extérieures d'une pièce par une inclinaison convenable de l'extrémité de l'un des trois bras d'un porte-torche.

L'appareil comporte un premier porte-organe initial susceptible de se mouvoir dans l'espace selon trois degrés de liberté et en outre un bras 9b entraîné en rotation par un moteur 9a, un bras 9d entraîné en rotation par un moteur 9c e un bras 9f entraîné en rotation par un moteur 9e.

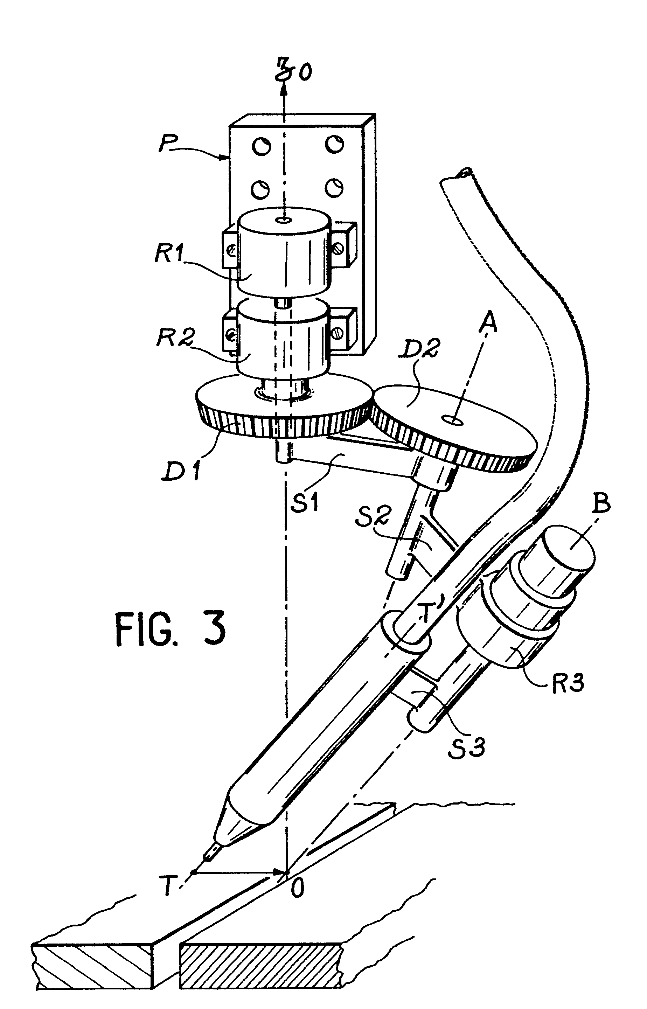

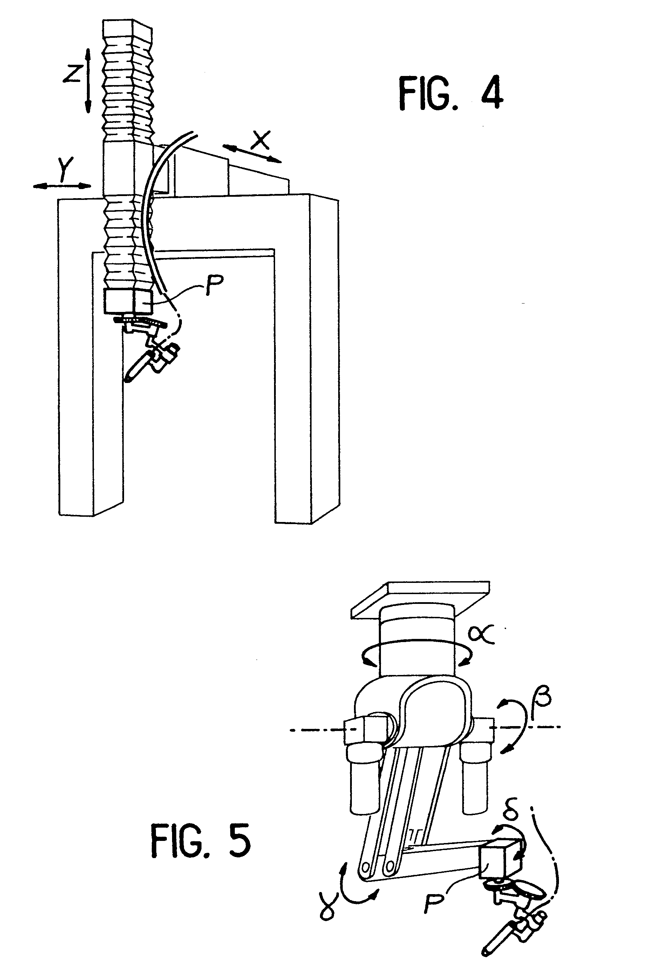

Toutefois, l'axe de la partie utile de la torche de soudage 10 n'est pas décalé par rapport à l'axe de rotation du moteur 9a. En effet, on observe que la torche de soudage 10 est coudée. Cette forme a été rendue nécessaire par la forme de la pièce à réaliser, qui présente une section en forme de U. On comprend que pour réaliser un cordon de soudure à l'intérieur de cette pièce, comme c'est le cas sur les figures 3, 4 et 5, la seule possibilité est d'introduire l'organe par la partie ouverte de la section en U. L'orientation générale de l'organe de soudage est ainsi déterminée par l'orientation de l'axe du U. Ainsi, cette orientation est horizontale sur les figures 3 et 5 et verticale sur la figure 4. En revanche, l'orientation de la partie active de la torche est déterminée par les conditions de soudage. Cette partie active doit être dirigée vers le cordon de soudure à réaliser. C'est ainsi que l'on a été conduit à utiliser l'organe coudé. Pour que cet organe puisse être convenablement orienté par rapport au cordon de soudure, on a été conduit à munir le porte-organe d'un bras 9f qui permet de ramener la torche de soudage dans une position telle que l'axe de sa partie active soit dirigé vers le point de travail, c'est-à-dire le point d'intersection des axes de rotation des bras 9b et 9d. Ce document a néanmoins servi de base pour l'élaboration du préambule de la revendication 1.

Au contraire, le porte-organe de l'invention réalise une adaptation de position et non pas une adaptation d'orientation. Dans l'invention, l'axe de l'organe de soudage est décalé par rapport à l'axe géométrique OB du second arbre. Lorsqu'on fait subir une rotation de faible amplitude au troisième support, ou trois rotations combinées aux trois supports, on fait varier la position du point de travail de façon quasiment linéaire. On obtient une quasi translation transversale au joint dans le premier cas, une translation de direction quelconque dans le deuxième cas. Ainsi, on superpose à l'adaptation de position donnée par le premier porte-organe un déplacement de faible amplitude de la position de l'organe terminal pour réaliser une adaptation fine et précise de position ou pour générer un mouvement de balayage, par exemple. Etant donné que cette rotation présente une faible amplitude, l'orientation de l'organe de soudage varie de manière négligeable. Grâce à cette caractéristique, il est possible de faire varier la position de l'organe de soudage, pour de petits déplacements, sans qu'il soit nécessaire de commander le premier porte-organe. Ceci permet un réglage fin de sa position de manière beaucoup plus souple.

L'invention a donc pour objet un porte-organe comportant un premier porte-organe initial susceptible de se mouvoir dans l'espace selon trois degrés de liberté pour commander la mise en position désirée de l'organe par rapport à son point de travail, ce premier porte-organe initial supportant lui-même un second porte-organe terminal comprenant, d'une part, un premier support portant un premier arbre dont l'axe géométrique est incliné par rapport à l'un des axes d'un système de référence dont l'origine est le point de travail, et sécant avec cet axe en ce point de travail, des premiers moyens rotatifs étant prévus pour pouvoir faire tourner ce premier arbre autour dudit axe du système de référence et, d'autre part, un second support porté par le premier arbre portant un second arbre dont l'axe géométrique est incliné par rapport à l'axe géométrique dudit premier arbre en étant sécant avec cet axe également audit point de travail, des seconds moyens rotatifs étant prévus pour pouvoir faire tourner ce second arbre autour de l'axe du premier; le second support porte un troisième support portant un troisième arbre sur lequel est monté l'organe, des troisièmes moyens rotatifs étant prévus pour pouvoir faire tourner ledit troisième arbre autour de l'axe du second caractérisé en ce que la partie active de l'organe est décalée par rapport à l'axe géométrique dudit second arbre.

Lorsque l'on actionne de façon combinée les premiers, seconds et troisièmes moyens rotatifs avec de faibles angles de rotation, on obtient une quasi translation de la partie active de l'organe selon une direction parallèle à l'un des axes de référence du plan perpendiculaire au premier axe précité et passant par le point de travail.

Lorsque l'on actionne seulement les troisièmes moyens rotatifs avec de faibles angles de rotation, on obtient une quasi translation de la partie active de l'organe selon une direction parallèle à l'autre axe de référence, perpendiculaire au premier, du plan précité.

Ainsi, on peut obtenir, avec de faibles rotations seules ou combinées, des premiers, seconds et troisièmes moyens rotatifs, une adaptation fine et précise selon deux degrés de liberté de la partie active de l'organe par rapport à son point de travail.

Ces résultats, obtenus par la mise en œuvre de l'invention, seront mieux appréciés au cours de la description ci-après des principes et d'un mode de mise en œuvre de l'invention.

Cette description sera faite en référence au dessin annexé, sur lequel:

– la fig. 1 est un schéma géométrique rappelant l'art antérieur de la technique que la présente invention perfectionne,

– la fig. 2 est le schéma géométrique d'un porte-organe perfectionné selon l'invention utilisable en télémanipulation ou robotique,

– la fig. 3 est une vue en perspective d'un mode de réalisation d'un porte-organe terminal selon l'invention, et

– les fig. 4 et 5 illustrent l'utilisation de ce porte-organe terminal en association avec deux types différents de porte-organe initiaux.

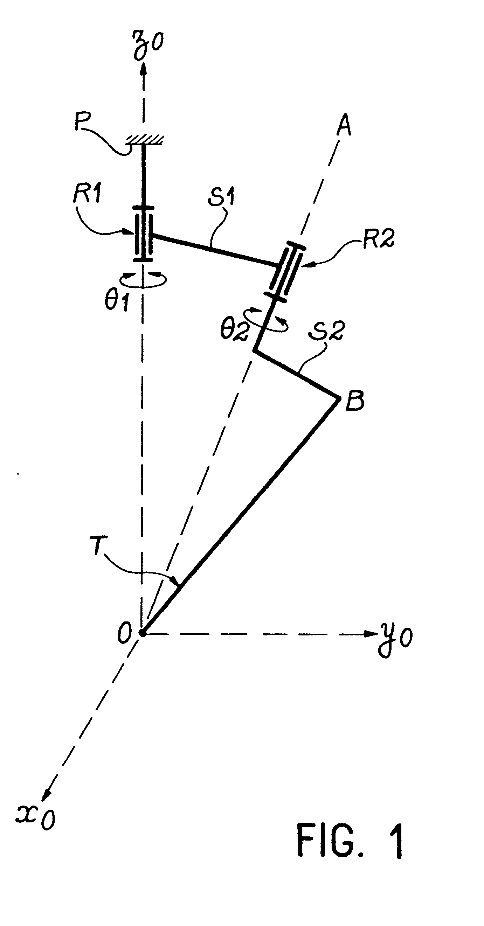

On se reportera d'abord au schéma géométrique de la figure 1 représentant l'art antérieur. Ce schéma correspond à un porte-organe comprenant un premier porte-organe initial, schématisé par le point P, susceptible d'être mis en une position quelconque de l'espace dans un système de coordonnées à trois degrés de liberté $x_0$, $y_0$, $z_0$. Le point de travail O est le point origine de ce système de coordonnées.

Ce premier porte-organe initial supporte lui-même un second porte-organe terminal comprenant un premier support, schématisé par un bras S1, portant un premier arbre dont l'axe géométrique OA est incliné par rapport à l'axe $Oz_0$ du système de référence lié au point de travail O. Des premiers moyens rotatifs R1, constitués d'un moteur électrique par exemple, permettent de faire tourner l'axe OA autour de l'axe $Oz_0$ selon des angles $\theta_1$.

Le premier support S1 supporte à son tour un second support, schématisé par un bras S2, portant un second arbre dont l'axe géométrique OB est incliné par rapport à l'axe OA et des seconds moyens rotatifs R2 permettent de faire tourner l'axe OB autour de l'axe OA selon des angles $\theta_2$. L'axe géométrique OB est confondu avec l'axe de l'organe, par exemple une torche de soudage, dont l'extrémité active est représentée en T à proximité du point de travail O.

On conçoit que, en actionnant le porte-organe initial P, on peut mettre en position l'extrémité T de l'organe à proximité du point de travail O choisi par rapport au système de références $x_0$, $y_0$, $z_0$. Ensuite, en agissant de façon combinée appropriée sur les moyens rotatifs R1 et R2, et donc en combinant des rotations $\theta_1$ et $\theta_2$, on peut orienter au choix l'axe OB par rapport au plan $x_0$, $Oy_0$. Il y a bien découplage à l'aide des deux dispositifs porte-organe, des fonctions de mise en position, d'une part, et orientation d'autre part, de l'organe T par rapport à son point de travail. Mais, lorsqu'il y a lieu d'affiner la position de l'organe T par rapport au point de travail O, on doit le faire par action sur le porte-organe initial de construction plus lourde et de maniement plus lent que dans le cas du porte-organe terminal.

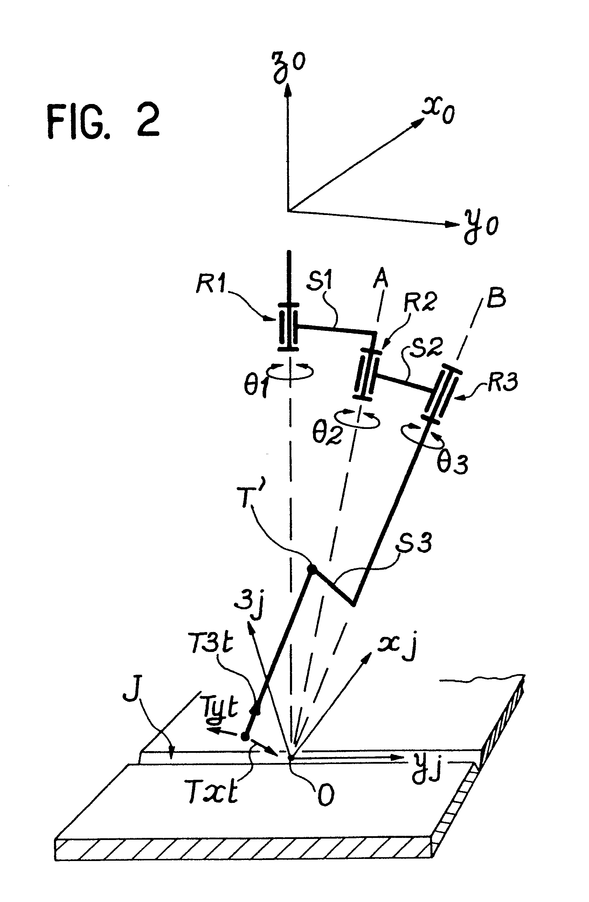

On se reportera maintenant au schéma géométrique de la figure 2 d'un porte-organe perfectionné selon l'invention.

Les mêmes repères de référence que ceux utilisés pour la figure 1 correspondent à des éléments identiques.

Selon l'invention, le support S2 supporte lui-même un troisième support S3 comportant un troisième arbre sur lequel est monté l'organe terminal de manière que l'extrémité active T de cet organe est en position décalée par rapport à l'axe OB du deuxième arbre. Des troisièmes moyens rotatifs R3 sont prévus pour pouvoir faire tourner le support S3 autour de l'axe OB selon des angles $\theta_3$.

Le porte-organe décrit ci-dessus dans son principe, fonctionne en trois temps.

Dans un premier temps, le porte-organe initial, par déplacement du point P par rapport au système de référence $x_0$, $y_0$, $z_0$, permet de conduire la partie active T de l'organe à proximité du point de travail O.

Dans un second temps, des rotations $\theta_1$, $\theta_2$ et $\theta_3$ permettent de régler l'orientation de l'outil TT' par rapport au point de travail O.

Sur la figure 2, on a schématisé, à titre d'exemple, un joint J de soudure à effectuer à l'aide de l'extrémité T d'une torche de soudage positionnée à proximité du point de travail ou soudure O.

On suppose que, après les premier et second temps de mise en œuvre, la torche TT' est approximativement en bonne position par rapport au point de soudure O, et en bonne orientation dans le plan $z_jOy_j$, et que, en raison par exemple d'irrégularité du joint J ou de déformations thermiques des tôles en cours de soudage, tous évènements aléatoires détectés par un détecteur non représenté, il y ait lieu d'adapter finement la position de la partie active T de la torche par rapport au point de soudure O, selon deux degrés de liberté, à savoir transversalement par rapport au joint J et en hauteur par rapport à ce joint. Dans ce cas, une faible rotation $\theta_3$ du support S3 permettra d'obtenir une quasi translation de T parallèlement au plan $z_jOx_j$, c'est-à-dire transversalement au joint. De même, une faible rotation combinée $\theta_1$, $\theta_2$, et $\theta_3$ permettra de maintenir T dans le plan $z_jOy_j$ tout en modifiant très légèrement l'orientation de TT' dans ce plan, ce qui équivaut à une quasi translation de la partie active T parallèlement à l'axe TT' et donc à une légère adaptation en hauteur de l'organe T par rapport au point de soudure O.

La figure 3 représente en perspective un porte-organe terminal selon l'invention. Les mêmes repères que sur les schémas des figures 1 et 2 correspondent à des éléments identiques.

On retrouve le support P, monté sur un porte-organe initial.

Un moteur R1, dont l'axe traverse un second moteur R2, fait tourner le premier support S1. L'axe OA est incliné par rapport à $Oz_0$ et sécant avec cet axe au point O. Quand le support S1 tourne, OA décrit un cône de sommet O et d'axe $Oz_0$.

Le support S1 porte à son tour un second support S2. Le moteur R2, par l'intermédiaire de roues dentées D1 et D2, peut faire tourner le support S2 autour de l'axe OA de sorte que l'axe OB du support S2 décrit un cône de sommet O et d'axe OA.

Le support S2 porte enfin un support S3 sur lequel est montée la torche de soudure TT' de sorte que la partie active T de cette torche est décalée par rapport à l'axe géométrique OB du troisième support S3. Un moteur R3 permet de faire tourner T autour de l'axe OB.

La figure 4 montre l'association d'un porte-organe terminal, tel que celui de la figure 3, en association avec un porte-organe initial classique du type cartésien à trois degrés de liberté X, Y et Z.

La figure 5 montre l'association du porte-organe terminal avec un porte-organe initial classique du type polyarticulé. Ce porte-organe possède trois degrés de liberté actifs par les rotations $\alpha$, $\beta$ et $\gamma$ qui en font l'équivalent d'un porteur cartésien, et un degré de liberté passif par rotation $\delta$ pour maintenir vertical le porteur terminal P.

Cette description se terminera par quelques commentaires sur l'utilisation des moyens décrits ci-dessus en association, nécessaire en pratique sinon en théorie, avec des moyens de commande automatique de séquences d'opérations de l'organe.

L'ensemble des moyens décrits ci-dessus amène à considérer, pour sa mise en œuvre, trois repères qui sont les suivants:

– un repère $R_0$ de base, qui est lié au porte-organe initial et permet de prendre en compte les coordonnées $x_0$, $y_0$ et $z_0$ du point P;

– un repère $R_j$, lié à la trajectoire que doit suivre l'organe pour effectuer séquentiellement ses opérations; par exemple ce repère $R_j$, lié au joint de soudure J et défini par le plan longitudinal $(z_jOy_j)$, transversal $(z_jOx_j)$, et tangent $(x_jOy_j)$ au joint J, est un repère cartésien $(x_j, y_j, z_j, 0)$; et

– un repère $R_t$, lié à la torche (ou à tout autre outil); ce repère $R_t$ aura pour origine le point T, extrémité active de la torche, et pour axes l'axe $Tz_t$ confondu avec l'axe de l'outil, et les axes $Tx_t$ et $Ty_t$ complètant le trièdre cartésien $(Tx_t, Ty_t, Tz_t, T)$.

Les relations entre ces différents repères sont les suivantes:

– les repères $R_t$ et $R_j$ sont liés par des conditions prédéterminées du processus opérationnel mis en œuvre définissant la position et l'orientation de l'organe par rapport à son point de travail, par exemple de la torche de soudure par rapport au joint. On a donc une première relation de la forme $R_t = F_p(R_j)$, $F_p$ indiquant qu'il s'agit d'une fonction définie selon un procédé;

– les repères $R_t$ et $R_0$ sont liés par une fonction d'apprentissage $F_a$ selon une relation de la forme $R_t = F_a(R_0)$.

La trajectoire généralisée modèle de l'organe en position et orientation (X, Y, Z) figure 4, ou ($\alpha$, $\beta$, $\gamma$, $\delta$) figure 5 et $\theta_1$, $\theta_2$, $\theta_3$ dans le repère $R_o$ sera définie par le calcul à partir des relations $F_p$ et $F_a$ liées au procédé et à l'apprentissage.

Par rapport à cette trajectoire modèle, on effectuera des corrections à partir d'informations provenant d'un détecteur de point de travail. Conformément à l'une des caractéristiques propres de l'invention, ces corrections ne s'exerceront pas sur le porte-organe initial, mais seulement sur le porte-organe terminal. Ces corrections ne concernant par exemple que deux degrés de liberté, porteront sur Y et Z et seront obtenues, par le calcul, par des variations faibles $\Delta\theta_1$, $\Delta\theta_2$ et $\Delta\theta_3$ des angles $\theta_1$, $\theta_2$ et $\theta_3$.

**Revendication**

Porte-organe adaptatif utilisable en télémanipulation ou robotique, du genre comportant un premier porte-organe initial (P) susceptible de se mouvoir dans l'espace selon trois degrés de liberté pour commander la mise en position désirée de l'organe (T) par rapport à son point de travail (O), ce premier porte-organe initial supportant lui-même un second porte-organe terminal comprenant, d'une part, un premier support (S1) portant un premier arbre dont l'axe géométrique (OA) est incliné par rapport à l'un des axes ($Oz_0$) d'un système de référence dont l'origine est le point de travail et sécant avec cet axe en ce point de travail (O), des premiers moyens rotatifs (R1) étant prévus pour pouvoir faire tourner ce premier arbre autour dudit axe ($Oz_0$) du système de référence et, d'autre part, un second support (S2) porté par le premier arbre portant un second arbre dont l'axe géométrique (OB) est incliné par rapport à l'axe géométrique (OA) dudit premier arbre en étant sécant avec cet axe également audit point de travail (O), des seconds moyens rotatifs (R2) étant prévus pour pouvoir faire tourner ce second arbre autour de l'axe (OA) du premier, ledit second support (S2) portant un troisième support (S3) portant un troisième arbre sur lequel est monté l'organe, des troisièmes moyens rotatifs (R3) étant prévus pour pouvoir faire tourner ledit troisième support (S3) autour de l'axe (OB) du second, caractérisé en ce que la partie active (T) de l'organe est décalée par rapport à l'axe géométrique (OB) dudit second arbre.

**Patentanspruch**

Ausrichtbarer Geräteträger, der bei Fernbedienungsgeräten und bei ferngesteuerten Manipulatoren verwendbar ist, mit einem ersten Ausgangstragteil (P), welches im Raum längs dreier Freiheitsgrade bewegbar ist, um die erwünschte Lagesteuerung des Gerätes (T) in Bezug auf seinen Arbeitspunkt (O) zu steuern, wobei dieses erste Ausgangstragteil selbst ein zweites Endtragteil hält, welches einerseits eine erste Stütze (S1) umfasst, die eine erste Welle haltert, deren geometrische Achse (OA) in Bezug auf eine der Achsen ($Oz_0$) eines Bezugssystems geneigt ist, dessen Ursprung der Arbeitspunkt ist, und mit dieser Achse diesen Arbeitspunkt (O) schneidet, wobei erste Drehmittel (R1) vorgesehen sind, um diese erste Welle um die genannte Achse ($Oz_0$) des Bezugssystems drehen zu können, und andererseits eine zweite, von der ersten Welle getragene Stütze (S2) aufweist, die eine zweite Welle haltert, deren geometrische Achse (OB) in Bezug auf die geometrische Achse (OA) der ersten Welle geneigt ist, wobei sie sich mit dieser Achse ebenfalls in dem Arbeitspunkt (O) schneidet, wobei zweite Drehmittel (R2) vorgesehen sind, um diese zweite Welle um die Achse (OA) der ersten drehen zu können und die zweite Stütze (S2) eine dritte Stütze (S3) trägt, die eine dritte Welle haltert, auf der das Gerät angebracht ist, und dritte Drehmittel (R3) vorgesehen sind, um die dritte Stütze (S3) um die Achse (OB) der zweiten drehen zu können, dadurch gekennzeichnet, dass der aktive Teil (T) des Gerätes in Bezug auf die geometrische Achse (OB) der zweiten Welle versetzt ist.

**Claim**

Adaptable toolholder which can be used in remote manipulation or robotics, of the type comprising a first initial toolholder (P) capable of moving in space according to three degres of freedom, to control the desired positioning of the tool (T) in relation to its work point (O), this first initial toolholder itself supporting a second terminal toolholder comprising, on the one hand, a first support (S1) carrying a first shaft, the geometrical axis (OA) of which is inclined relative to one of the axes ($Oz_0$) of a reference system, the origin of which is the work point and is secant with this axis at this work point (O), first rotary means (R1) being provided to make it possible to rotate this first shaft about the said axis ($Oz_0$) of the reference system, and, on the other hand, a second support (S2) carried by the first shaft and carrying a second shaft, the geometrical axis (OB) of which is inclined relative to the geometrical axis (OA) of the said first shaft and is secant with this axis likewise at the said workpoint (O), second rotary means (R2) being provided to make it possible to rotate the second shaft about the axis (OA) of the first, the said second support (S2) carrying a third support (S3) carrying a third shaft, on which the tool is mounted, third rotary means (R3) being provided to make it possible to rotate the said third support (S3) about the axis (OB) of the second, characterized in that the active part (T) of the tool is offset relative to the geometrical axis (OB) of the said second shaft.

FIG. 1

FIG. 2

FIG. 3

FIG. 4

FIG. 5